(19) Europäisches Patentamt
European Patent Office
Office européen des brevets

(11) **EP 2 991 830 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **14718108.5**

(22) Anmeldetag: **17.04.2014**

(51) Int Cl.:
**B32B 27/30** *(2006.01)*  **B32B 27/40** *(2006.01)*

(86) Internationale Anmeldenummer:
**PCT/EP2014/057858**

(87) Internationale Veröffentlichungsnummer:
**WO 2014/177393 (06.11.2014 Gazette 2014/45)**

(54) **ELASTOMER-PMMA-SCHICHTVERBUNDE MIT VERBESSERTEN EIGENSCHAFTEN**

ELASTOMER PMMA LAYERED COMPOSITES HAVING IMPROVED PROPERTIES

COMPOSITES FEUILLETÉS ÉLASTOMÈRE-PPMA À PROPRIÉTÉS AMÉLIORÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2013 DE 102013207813**
**07.03.2014 DE 102014204189**

(43) Veröffentlichungstag der Anmeldung:
**09.03.2016 Patentblatt 2016/10**

(73) Patentinhaber:
• **Evonik Röhm GmbH**
**64293 Darmstadt (DE)**
• **BASF SE**
**67056 Ludwigshafen am Rhein (DE)**

(72) Erfinder:
• **HÖSS, Werner**
**64409 Messel (DE)**
• **SCHMIDT, Arne**
**64287 Darmstadt (DE)**
• **MANIS, Antonios**
**64293 Darmstadt (DE)**

(56) Entgegenhaltungen:
**EP-A1- 1 577 084**  **EP-A2- 0 239 877**
**EP-A2- 0 800 916**  **WO-A1-98/36908**
**WO-A1-2008/000528**  **DE-A1-102004 014 023**

EP 2 991 830 B1

## Beschreibung

### Gebiet der Erfindung

Gegenstand der Erfindung ist ein Kunststoff-Schichtverbund insbesondere für die Fahrzeugverscheibung. Der Verbund besteht aus mindestens drei Schichten, wobei die beiden äußeren Schichten aus einem transparenten Polymethyl(meth)acrylat (PMMA) und die innen liegende Schicht aus einem thermoplastischen Polyurethan (TPU) bestehen. Der Kunststoff- Schichtverbund besteht den Kugelfalltest gemäß ECE R43 und verfügt gegenüber Kunststoffverbunden gleicher Dimension nach Stand der Technik über verbesserte akustische Eigenschaften.

### Stand der Technik

Für Anwendungen in technischen Bereichen wie Trennwände, Bauverglasungen oder Verglasungen im Automobilbau werden hoch bruchfeste transparente Platten bzw. Scheiben nachgefragt. Dabei stellen transparente Kunststoffe wie PMMA eine gute und insbesondere leichtgewichtige Alternative zu Scheiben aus Mineralglas dar. Bei Polymethyl(meth)acrylat (PMMA) kann durch Zugabe von Schlagzähmodifiern die Zähigkeit verbessert werden. Dies führt in der Regel dazu, dass andere Eigenschaften wie beispielsweise das Elastizitätsmodul und Oberflächenhärte reduziert werden. Weiterhin zeigen die üblicherweise mit Schlagzähmodifiern auf Butylacrylat-Basis modifizierten Produkte nur geringe Kälteschlagzähigkeit. Eine Alternative, die eine Erhöhung der Schlagzähigkeit unter Beibehaltung der Oberflächenhärte von Polymethyl(meth)acrylat sowie des Elastizitätsmoduls ermöglicht, sind Kunststoff- Schichtverbundscheiben. Als Anwendungsbereich können diese Verbunde z.B. in der Automobilverglasung sowie anderen Anwendungen, bei denen die Kombination von hoher mechanischer Festigkeit mit dem hohen Elastizitätsmodul von PMMA und der hohen Oberflächenhärte gefragt sind, zum Einsatz kommen. Dies können z.B. transparente Blenden, Maschinenabdeckungen Fahrzeuganbauteile wie Windabweiser und Dachmodule sein.

EP 1577084 (KRD Coatings GmbH) beschreibt eine Kunststoff-Verbundscheibe für die Fahrzeugverscheibung, wobei die Innenseite aus Polycarbonat (PC) und die Außenseite aus PMMA besteht. Die Zwischenschicht, gedacht für die Aufnahme der unterschiedlichen Wärmeausdehnungen der Kunststoffe PC und PMMA, besteht aus einem thermoplastischen Polyurethan (TPU). Angaben über die mechanische Festigkeit fehlen. Zudem hat Polycarbonat den Nachteil einer verminderten Witterungsstabilität, so dass solche Verbünde bei einem sehr langen Einsatz zur Verfärbung neigen können.

WO 02/47908 (VTEC Technologies) offenbart ein Verglasungselement aus drei Schichten unterschiedlicher Kunststoffe. Eine Schicht besteht dabei aus PMMA, die Zwischenschicht aus einem Polyurethan (PU) oder aus Polyvinylbutyral (PVB), die weitere Schicht besteht aus PC. Die Außenseiten des Verglasungselements sind kratzfest beschichtet. Angaben über die mechanische Festigkeit oder sonstige mechanische Eigenschaften des Verglasungselements, außer Angaben zur Kratzfestigkeit, fehlen. Weiterhin hat auch ein solches System die Nachteile, die sich aus dem verwendeten Polycarbonat ergeben.

WO 96/13137 (Decoma International) beschreibt ein Verglasungselement für Fahrzeuge, in das Heizelemente integriert sind, wie beispielsweise in Heckscheiben von Fahrzeugen. Dabei weist die Scheibe eine dünne Schicht aus Polycarbonat oder Polyester und eine dicke Schicht aus Polycarbonat oder Polymethacrylat auf. Solche Materialkombinationen weisen jedoch nur eine unzureichende Bruchfestigkeit auf.

In Patentanmeldung DE 102006029613 wird ein Verbund aus TPU und zwei äußeren PMMA-Schichten beschrieben. Dabei können als TPU sowohl Polyester- als auch Polyether-basierende Polymere eingesetzt werden. Die beschriebenen TPU können linear oder optional verzweigt sein. Jedoch weisen die verwendeten TPU einen gleichmäßigen Aufbau bezüglich Ihrer Zusammensetzung auf, so dass diese entweder hochkristallin oder vollständig amorph sind. Kristalline TPU sind jedoch für Verglasungen nicht transparent genug, während amorphe TPU keine ausreichende Wirkung bezüglich der Bruchfestigkeit bewirken.

### Aufgaben

Vor dem Hintergrund des diskutierten Standes der Technik war es somit Aufgabe der vorliegenden Erfindung eine neuartige Art von hochtransparenten Kunststoff-Schichtverbünden zur Verfügung zu stellen. Diese neue Kunststoff-Schichtverbundscheibe soll dabei eine hohe Transparenz bei gleichzeitig hoher Bruchfestigkeit aufweisen.

Darüber hinaus lag der vorliegenden Erfindung die Aufgabe zugrunde, dass die zu entwickelnde Kunststoff-Schichtverbundscheibe auch bei einer Langzeitverwendung unter Witterungsbedingungen, z.B. als Automobilverglasung, keine Verfärbung aufzeigt.

Weiterhin war es Aufgabe der vorliegenden Erfindung, eine solche Kunststoff-Schichtverbundscheibe zu entwickeln, die einfach herzustellen ist, allgemein gute mechanische Eigenschaften aufweist und einfach zu verarbeiten bzw. zu verbauen ist.

Darüber hinaus der Erfindung zugrunde liegende Aufgaben können sich implizit aus der Beschreibung, den Ansprüchen oder den Beispielen ergeben, ohne dass diese an dieser Stelle explizit aufgeführt sind.

**Lösung**

Der erfindungsgemäße Kunststoffverbund besteht aus mindestens drei Schichten aus Kunststoffen, wobei die beiden äußeren Schichten (1) und (2) aus transparenten Poly(meth)acrylat-Schichten und die innen liegende Schicht aus einem thermoplastischen Polyurethan (TPU) (3) bestehen.

Unter dem TPU wird erfindungsgemäß ein nicht vernetztes Polyurethan verstanden, welches Hart- und Weichsegmente aufweist. Insbesondere weist das TPU 30 bis 60 Gew%, bevorzugt 30 bis 45 Gew% Hartsegmente und 40 bis 70 Gew%, bevorzugt 55 bis 70 Gew% Weichsegmente auf.

Der Hartphasenanteil wird nach folgender Formel bestimmt:

$$Hartphasenanteil = \{\sum_{x=1}^{k}[(m_{KVx} / M_{KVx}) * M_{Iso} + m_{KVx}]\} * 100 Gew\% / m_{ges}$$

mit den folgenden Bedeutungen:

$M_{KVx}$: Molare Masse der Kettenverlängerers x in g/mol
$m_{KVx}$: eingesetzte Masse des Kettenverlängerers x in g
$M_{Iso}$: Molare Masse des verwendeten Isocyanates in g/mol
$m_{ges}$: Gesamtmasse aller Ausgangsstoffe in g
k: Anzahl der Kettenverlängerer.

Schichtdicken von (1) und (2) können in Bereichen von 0,1 bis 6 mm, bevorzugt von 1 bis 4 mm liegen, die von (3) im Bereich von 0,05 bis 5 mm, bevorzugt von 0,5 bis 1,5mm liegen. Die Schichtdicken von (1) und (2) können gleich oder verschieden sein, d.h. ein symmetrischer Aufbau der Schichten sowie ein unsymmetrischer Aufbau der Schichten ist möglich. Bevorzugt kann eine äußere Schicht des Kunststoff-Schichtverbunds dicker ausgeführt werden, wobei die beiden äußeren Schichten (1) und (2) aus transparenten PMMA ein Dickenverhältnis von 1:100 , bevorzugt 1:50 besonders bevorzugt 1:10 aufweisen können.

Überraschenderweise konnte gefunden werden, dass abhängig von der Kombination spezieller PMMA und TPU hervorragende Verbundhaftungen und somit bessere mechanische Eigenschaften erreicht werden.

Weiterhin können eine oder beide PMMA-Schichten IR-reflektierende Pigmente und/oder UV-Absorber und/oder UV-Stabilisatoren aufweisen. Geeignete IR-reflektierende Pigmente sind z.B. in der EP 1817375 beschrieben. Geeignete UV-Absorber bzw. UV-Stabilisatoren finden sich in der EP 1963415, wobei diese einzeln oder in Mischungen, auch verschiedener UV-Stabilisatoren bzw. -Absorber eingesetzt werden können.

Zur Erreichung eines glasartigen Tiefeneffektes kann eine Schicht, bevorzugt die innere Schicht bezogen auf die Anwendung teilweise oder komplett eingefärbt sein. Hierbei können transparente Einfärbung wie z.B. Grautöne bis zu nicht transparenten Einfärbungen wie z.B. schwarz zum Einsatz kommen.

Optional und nicht zwingend enthält mindestens eine der beiden PMMA-Schichten zusätzlich Schlagzähmodifier. Überraschend wurde gefunden, dass die erfindungsgemäßen Kunststoff-Schichtverbundscheiben auch ohne Schlagzähmodifier eine gute Schlagzähigkeit aufweisen. Dennoch können diese optional zugegeben werden. Geeignete Schlagzähmodifier - auch für transparente Verscheibungen - sind dem Fachmann allgemein bekannt und können beispielsweise gleichfalls in der EP 1963415 nachgelesen werden.

Hergestellt werden können entsprechende Kunststoff-Schichtverbundscheiben mittels Hinterspritzen einer ersten Schicht mit den anderen beiden Schichten, bzw. eines Zweischichtverbunds mit der dritten Schicht. Alternativ sind auch Coextrusions oder Laminationsverfahren denkbar. Bevorzugt wird die erfindungsgemäße Kunststoff-Schichtverbundscheibe mittels Verpressen hergestellt. Dazu werden die Schichten (1), (3) und (2) aufeinandergelegt, auf eine Temperatur zwischen 80 und 140 °C erhitzt und mit einer Kraft zwischen 10 und 100 kN über einen Zeitraum zwischen 20 und 60 s verpresst.

Detaillierte Beschreibung der TPU

Wie bereits ausgeführt wird unter dem TPU erfindungsgemäß ein nicht vernetztes, thermoplastisch verarbeitbares, aliphatisches Polyurethan verstanden, welche Hart-und Weichsegmente aufweist. Insbesondere weist das TPU 30 bis 60 Gew%, bevorzugt 30 bis 45 Gew% Hartsegmente auf. Die erfindungsgemäß verwendeten TPU zeichnen sich dadurch aus, dass die Hartsegmente in der Schicht kristallisieren, während die Weichsegmente überwiegend amorph in dieser Schicht vorliegen. Damit das optische Erscheinungsbild der Verglasung nicht gestört wird, dürfen die Hartsegmente nicht zu groß sein. Auf diese Weise werden Kristallite in der Matrix vermieden, die zu einer Lichtbrechung im optisch sichtbaren Bereich und damit zu einer Trübung der Verglasung führen würden.

In einer anderen bevorzugten Ausführungsform wird die Hartphase so eingestellt, dass nur ein kleiner Teil des Hartsegments, weiter bevorzugt das Hartsegment praktisch nicht kristallin vorliegt. Dies hat den Vorteil, dass die so hergestellten thermoplastischen Polyurethane eine verbesserte Transparenz aufweisen.

Bei den Weichsegmenten des TPU handelt es sich um Segmente bestehend aus überwiegend aliphatischen Polyestern, aus Polyethern oder aus Mischpolymerisaten mit Ester- und Ether-Gruppen.

Bei einer anderen erfindungsgemäßen Ausführungsform besteht das Weichsegment aus Polycarbonaten, die bevorzugt auf Alkandiolen basieren. Geeignete Polycarbonatdiole besitzen funktionelle OH-Gruppen und sind weiter bevorzugt difunktionell.

Die Weichsegmente werden auch Polyole genannt. Bevorzugt ist der Anteil aromatischer Bausteine dieser Segmente kleiner 20 Gew%, besonders bevorzugt kleiner 10 Gew% und ganz besonders bevorzugt weisen die Weichsegmente gar keine Aromaten auf.

Zur Herstellung der TPU werden die Bausteine für die die Weichsegmente in Form von Diolen mit den anderen zur Herstellung benötigten Komponenten, wie insbesondere den unten beschriebenen Diisocyanaten, umgesetzt. Aliphatische Diisocyanate sind bevorzugt.

Aufgrund der besonders guten Schlagzähigkeit und besseren UV-Beständigkeit der resultierenden TPU sind insbesondere TPU auf Basis von aliphatischen Polyesterdiolen bevorzugt.

Die Polyole, bevorzugt die aliphatischen Polyesterdiole haben bevorzugt ein zahlenmittleres Molekulargewichten von $0{,}500 \times 10^3$ g/Mol bis $8 \times 10^3$ g/Mol, bevorzugt $0{,}6 \times 10^3$ g/Mol bis $4 \times 10^3$ g/Mol, insbesondere $0{,}7 \times 10^3$ g/Mol bis $2{,}6 \times 10^3$ g/Mol , und bevorzugt einer mittleren Funktionalität von 1,8 bis 2,6, bevorzugt 1,9 bis 2,2, insbesondere 2.

Unter dem Ausdruck "Funktionalität" ist insbesondere die Anzahl an aktiven Wasserstoffatomen, insbesondere solche in Hydroxylgruppen, zu verstehen.

In einer bevorzugten Ausführungsform wird nur ein Polyol verwendet, in einer anderen bevorzugten Ausführungsform werden Mischungen von Polyolen eingesetzt, die in der Mischung den o.g. Anforderungen entsprechen.

Bevorzugt setzt man als Diole aliphatische Polyesterdiole ein. Bevorzugt sind Polyesterdiole basierend auf Adipinsäure und Gemischen aus Ethandiol-1.2 und Butandiol-1.4, Polyesterole basierend auf Adipinsäure und Gemischen aus Butandiol-1.4 und Hexandiol-1.6, Polyesterole basierend auf Adipinsäure und 3-Methyl-Pentandiol-1.5 und/oder Polytetramethylenglykol (Polytetrahydrofuran, PTHF), und/oder Polycaprolacton. Ganz besonders bevorzugtes Polyesterdiol ist Polycaprolacton, das weiter bevorzugt ein zahlenmittleres Molekulargewichten von $0{,}500 \times 10^3$ g/Mol bis $5 \times 10^3$ g/Mol, bevorzugt $0{,}8 \times 10^3$ g/Mol bis $2{,}5 \times 10^3$ g/Mol, insbesondere $0{,}8 \times 10^3$ g/Mol bis $2{,}2 \times 10^3$ g/Mol und ganz besonders bevorzugt $2 \times 10^3$ g/Mol hat.

Bei den Hartsegmenten wiederum handelt es sich um Segmente, die durch die Cokondensation von bifunktionellen Isocyanaten mit relativ niedermolekularen Diolen, welche 10 oder weniger, bevorzugt zwischen 2 und 6 Kohlenstoffatome aufweisen, erhalten werden können. Diese auch als Kettenverlängerer bezeichneten Diole haben bevorzugt ein Molekulargewicht zwischen 50 g/Mol und 499 g/Mol.

Bei den bifunktionellen Isocyanaten kann es sich um aromatische, cycloaliphatische, sowie auch aliphatische Diisocyanate handeln. Insbesondere bevorzugt sind Diisocyanate, die allgemein aus der Polyurethanchemie bekannt sind. Dabei handelt es sich beispielsweise um ein MDI (Diphenylmethan-diisocyanat) als Beispiel für aromatische Diisocyanate oder um HDI (Hexamethylendiisocyanat) bzw. um ein H12MDI (Dicyclohexylmethan-diisocyanat) als Beispiele für aliphatische Diisocyanate.

Bevorzugte Isocyanate sind Tri-, Tetra-, Penta-, Hexa-, Hepta- und/oder Oktamethylendiisocyanat, 2-Methyl-pentamethylen-diisocyanat-1,5,2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, (IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexan-diisocyanat, 4,4'-, 2,4'-und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), und/oder Dicyclohexylmethan-4,4'-diisocyanat (H12MDI).

Weiter bevorzugt sind hiervon die cycloaliphatischen und/oder die aliphatischen Diisocyanate, ganz besonders bevorzugt ist Dicyclohexylmethan-4,4'-diisocyanat (H12MDI), das weiter bevorzugt als einziges Isocyanat eingesetzt wird.

Aufgrund der höheren UV-Beständigkeit sind TPU auf Basis von aliphatischen Diisocyanaten gegenüber solchen auf Basis von aromatischen Diiscocyanaten bevorzugt. Als Variante sind auch Mischungen verschiedener Diisocyanate im TPU einsetzbar.

Da die erwähnten, relativ kleinen Diisocyanate allein noch nicht dazu geeignet sind, ausreichend lange Hartsegmente zu bilden und damit gewünschte Kristallite aufzubauen, werden die Hartsegmente mittels einer höheren Konzentration von Diisocyanaten und die zusätzliche Zugabe von Diolen, wie z.B. Butandiol oder Hydrochinon, zu längeren Segmenten mit verschiedenen Polyurethangruppen umgesetzt. Diese Diole werden auch Kettenverlängerer genannt. Als derartige Kettenverlängerungsmittel werden allgemein bekannte aliphatische, aromatische und/oder cycloaliphatische Verbindungen eingesetzt. Bevorzugt sind aliphatische Kettenverlängerer. Das Molekulargewicht der Kettenverlängerer liegt bevorzugt zwischen 50 g/Mol und 499 g/Mol. Weiter bevorzugt haben die Kettenverlängerer 2funktionelle Gruppen. Bevorzugt sind die Kettenverlängerer Diamine und/oder Alkandiole mit 2 bis 10 Kohlenstoffatomen im Alkylenrest.

Bevorzugte Alkandiole sind 1,2-Ethandiol, 1,3-Propandiol, 1,4-Butandiol, 1,6-Hexandiol und/oder 1,4-Di-(β-hydroxyethyl)-hydrochinon. Besonders bevorzugt ist 1,2-Ethandiol, 1,4-Butandiol und/oder 1,6-Hexandiol. Ganz besonders bevorzugt ist 1,4-Butandiol.

Bevorzugte Diamine sind aliphatische Diamine, insbesondere Ethylendiamin oder Propylendiamin oder Mischungen enthaltend Ethylendiamin und Propylendiamin.

Insgesamt weist eine Kette der erfindungsgemäß verwendeten TPU mehrere Weich-und mehrere Hartsegmente auf. Die Länge und die Anzahl der einzelnen Segmente lassen sich für den Fachmann einfach durch geeignete Wahl der Diole für die Weichsegmente, die Äquivalente der einzelnen Bestandteile und die Reaktionsbedingungen der Polykondensation zur Ausbildung der Polyurethanbindungen einstellen.

Ein ganz besonders bevorzugtes thermoplastisches Polyurethan (TPU) basiert auf Dicyclohexylmethan-4,4'-diisocyanat (H12MDI) und Polycaprolactonpolyol, bevorzugt mit dem Kettenverlängerer 1,4-Butandiol. Dieses TPU hat bevorzugt ein gewichtsmittleres Molekulargewicht von $40 \times 10^3$ Dalton bis $0,3 \times 10^6$ Dalton, bevorzugt $50 \times 10^3$ bis $0,15 \times 10^6$ Dalton und weiter bevorzugt 30 bis 60 Gew%, bevorzugt 30 bis 45 Gew.-% Hartsegmente und 40 bis 70 Gew.-%, bevorzugt 55 bis 70 Gew.-% Weichsegmente. Der prozentuale Anteil der Weichsegmente in dem thermoplastischen Polyurethan ist die Differenz 100 Gew.-% minus Gew.-% Hartphase, wobei die Gewichtsprozente in der Hartphase gemäß obiger Formel berechnet werden.

Den thermoplastischen Polyurethanen können übliche Additive zugegeben werden, die beispielsweise dem Polyurethane Handbook, 2nd Edition, Günter Oertel, Hanser Publisher, München 1993 Seiten 98-119 entnommen werden können.

Bevorzugt werden als Additive auch UV-Stabilisatoren, Hydrolyseschutzmittel und/oder Antioxidantien zugegeben, wodurch die Transparenz des thermoplastische Polyurethans länger erhalten bleibt. Bevorzugte Hydrolysestabilisatoren sind Carbodiimide, Epoxide oder Cyanate. Carbodiimide sind kommerziell unter Handelsnamen wie z.B. Elastostab™ oder Stabaxol™ erhältlich.

Bevorzugte Antioxidatien sind sterisch gehinderte Phenole und andere reduzierende Substanzen. Bevorzugte UV-Stabilisatoren sind Piperidine, Benzophenone oder Benzotriazole. Beispiele für besonders geeignete Benzotriazole sind Tinuvin® 213, Tinuvin® 234, Tinuvin® 571, sowie Tinuvin® 384 und das Eversorb®82. Üblicherweise werden die UV-Absorber in Mengen von 0.01 Gew.-% bis 5 Gew.-% bezogen auf die Gesamtmasse TPU zudosiert, bevorzugt 0,1 Gew.-% - 2,0 Gew.-%, insbesondere 0,2 Gew.-% - 0,5 Gew.-%.

In einer besonders bevorzugten Ausführungsform werden dem thermoplastischen Polyurethan keine UV-Stabilistoren zugesetzt, weiter bevorzugt werden hierbei jedoch Hydrolyseschutzmittel und/oder Antioxidantien zugesetzt.

Detaillierte Beschreibung der PMMA-Schichten

Die äußeren Schichten der erfindungsgemäßen Kunststoff-Schichtverbundscheibe bestehen aus PMMA. PMMA wird im Allgemeinen durch radikalische Polymerisation von Mischungen erhalten, die (Meth)acrylate enthalten. Der Ausdruck (Meth)acrylate umfasst Methacrylate und Acrylate sowie Mischungen aus beiden. Dabei besteht das PMMA zu einem überwiegenden Teil aus Wiederholungseinheiten, die durch Polymerisation des Methylmethacrylats (MMA) erhalten werden. Gemäß einem bevorzugten Aspekt der vorliegenden Erfindung enthalten die zur Herstellung des PMMA eingesetzten Monomermischungen mindestens 60 Gew%, vorzugsweise mindestens 80 Gew% und besonders bevorzugt mindestens 90 Gew%, bezogen auf das Gewicht der Monomere, Methylmethacrylat.

Darüber hinaus kann das erfindungsgemäß verwendete PMMA jedoch auch weitere Comonomere, insbesondere Methacrylate oder Acrylate aufweisen. Insbesondere durch Copolymerisation schon geringer Mengen Acrylate kann die thermische Stabilität der beanspruchten Polymethylmethacrylate deutlich erhöht werden.

Die zur Herstellung für Verglasungen geeigneten PMMA-Produkte sind dem Fachmann im Allgemeinen bekannt und können z.B. in der DE 102006029613 nachgelesen werden. Auch können die Polymere einzeln oder als Mischung verwendet werden. Beispielhaft verwendbare Formmassen, die Poly(meth)acrylate umfassen, sind unter dem Handelsnamen PLEXIGLAS® XT oder PLEXIGLAS® 8N von Evonik Ind. kommerziell erhältlich.

Die erfindungsgemäßen Kunststoffplatten können beispielsweise aus Formmassen der zuvor genannten Polymere hergestellt werden. Hierbei werden im Allgemeinen thermoplastische Formgebungsverfahren eingesetzt, wie Extrusion oder Spritzguss. Des Weiteren können die Kunststoffplatten durch Gusskammerverfahren erzeugt werden. Hierbei werden beispielsweise geeignete Acrylharzmischungen in einer Form gegeben und polymerisiert. Derartig hergestellte Platten sind unter der Handelsbezeichnung PLEXIGLAS® GS von Evonik Ind. kommerziell erhältlich. Aus kontinuierlichen Gussverfahren gewonnene Platten können ebenfalls eingesetzt werden.

Zusatzstoffe

Des weiteren können die zur Herstellung der Kunststoffplatten zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher. Die Menge an Zusatzstoffen ist jeweils auf den Anwendungszweck anzupassen.

Platten, die gemäß einem der oben genannten Verfahren hergestellt wurden, können transparent oder eingefärbt sein. Eine Färbung der Platten kann beispielsweise durch Farbstoffe oder Pigmente erzielt werden.

Dementsprechend können beliebige Kunststoffplatten gemäß dem Verfahren der vorliegenden Erfindung miteinander kombiniert werden. Beispielsweise können PLEXIGLAS® XT-Platten mit PLEXIGLAS® GS-Platten und/oder PLEXIGLAS ® GS-Platten mit PLEXIGLAS® SZ-Platten und/oder PLEXIGLAS® LSW-Platten mit PLEXIGLAS ® XT-Platten kombiniert werden, wobei eine farblose mit einer gefärbten Platten oder zwei farblose Platten oder zwei farbige Platten miteinander verbunden werden können.

Verwendung

Bevorzugt finden die erfindungsgemäßen Kunststoff-Schichtverbundscheiben Verwendung als Verglasung in einem Automobil, Schienenfahrzeug, Luftfahrzeug, Glashaus, einer Reklametafel oder einem Gebäude.

Beispiele

PLEXIGLAS® 6N ist eine PMMA Formmasse der Evonik Ind. Es handelt sich dabei um ein Copolymer von Methylmethacrylat und Methylacrylat mit einem Molekulargewicht von ca 120 000 g/mol. Detaillierte Daten können dem Datenblatt der Fa Evonik Ind für PLEXIGLAS® 6N oder aus Werkstoff- Datenbanken, wie z.B. CAMPUS entnommen werden.

ELASTOLLAN® L785A10 ist ein aliphatische Polyesterurethan der Fa. BASF Polyurethanes GmbH mit einem Hartsegmentanteil von 38%, einer Shore A Härte von 85 sowie einer Bruchdehnung von 520% und einem MVR (190°C / 10 kg) von 38 cm$^3$/10min. Dieses aliphatische Polyesterurethan basiert auf Polycaprolacton mit einem zahlenmittleren Molekulargewicht von 2,0 x 10$^3$ g/Mol als Polyol, 1,4-Butandiol als Kettenverlängerer und Dicyclohexylmethan-diisocyanat (H12MDI) mit geeigneten Antioxidantien, Hydrolyseschutzmittel und UV-Stabilisatoren.

ELASTOLLAN® L1154D10 ist ein auf einem aliphatischen Polyether basierendes TPU der Fa. BASF Polyurethanes GmbH mit einem Hartsegmentanteil von 50%, einer Shore D Härte von 63 sowie einer Bruchdehnung von 310% und einem MVR (200°C / 21,6kg) von 19,6 cm$^3$/10min. Dieses aliphatische Polyetherurethan basiert auf Polytetrahydrofuran (PTHF) mit einem zahlenmittleren Molekulargewicht von 1,0 x 10$^3$ g/Mol als Polyol, 1,4-Butandiol als Kettenverlängerer und Dicyclohexylmethandiisocyanat (H12MDI) mit geeigneten Antioxidantien, Hydrolyseschutzmittel und UV-Stabilisatoren.

ELASTOLLAN® L1185A10(3) ist ein auf einem aliphatischen Polyether basierendes TPU der Fa. BASF Polyurethanes GmbH mit einem Hartsegmentanteil von 38%, einer Shore D Härte von 42 sowie einer Bruchdehnung von 380% und einem MVR (200°C / 21,6kg) von 25,1 cm$^3$/10min. Dieses aliphatische Polyetherurethan basiert auf Polytetrahydrofuran (PTHF) mit einem zahlenmittleren Molekulargewicht von 1,0 x 10$^3$ g/Mol als Polyol, 1,4-Butandiol als Kettenverlängerer und Dicyclohexylmethandiisocyanat (H12MDI) mit geeigneten Antioxidantien, Hydrolyseschutzmittel und UV-Stabilisatoren.

Beispiel 1

Mittels einer Coextrusionsanlage Dr.Collin, ausgestattet mit einer Mehrschichtextrusiuonsdüse mit einer Breite von 240mm, einem Einschneckenextruder (45mm Schneckendurchmesser und Schneckenlänge 40D) sowie zwei Coextrudern (Schneckendurchmesser 20mm, Schneckenlänge 40D) wurden erfindungsgemäße Kunststoffverbunde, bestehend aus drei Schichten extrudiert, wobei die beiden äußeren Schichten (1) und (2) aus PLEXIGLAS® 6N und die innenliegende Schicht aus einem TPU (3) ELASTOLLAN® L785A10 besteht. Die beiden äußeren Schichten (1) und (2) aus PLEXIGLAS® 6N weisen je eine Dicke von 2 mm auf. Die innenliegende Schicht aus TPU (3) ELASTOLLAN® L785A10 zeigt eine Schichtdicke von 500 μm. Aus den extrudierten Platten wurden Probekörper mit einer Breite und einer Länge von jeweils 90 mm mittels Laser herausgeschnitten. An diesen Probekörpern wurden Durchstoßversuche zur Bestimmung mechanischer Eigenschaften in Anlehnung an DIN EN ISO 6603-2 durchgeführt. Die Durchstossversuche wurden auf einer Zwick/Roell Amsler HTM 5020 mit einer maximalen Durchstosskraft von 50 N und einer Prüfgeschwindigkeit von 1m/s bei 23 °C durchgeführt. Geprüft wurden je 3 Proben. Die angegebenen Messwerte stellen die Mittelwerte aus den 3 Einzelmessungen dar. Anlehnung an DIN EN ISO 6603-2 bedeutet in diesem Zusammenhang, dass folgende Messvorgaben abweichend von der Norm durchgeführt wurden: In der Norm sind Abmessungen des Probenkörpers mit einem Durchmesser von 60 mm und einer Dicke von 2 mm angegeben. Gemessen wurde an Probenkörpern mit den entsprechenden Abmessungen D = 89 mm und t = 4 mm.

Die durchgeführten Durchstoßversuche zur Bestimmung mechanischer Eigenschaften ergaben für Verbunde aus aliphatischen Polyester basierten TPU ELASTOLLAN® L785A10 in Kombination mit PLEXIGLAS® 6N eine Durchstoßarbeit von 11 500 Nmm.

Beispiel 2

Wie Beispiel 1 beschrieben, wurden auf einer Dr. Collin Coextrusionsanlage ein Kunststoffverbund, bestehend aus drei Schichten, extrudiert. Dabei setzen sich die beiden äußeren Schichten (1) und (2) aus PLEXIGLAS® 6N und die innenliegende Schicht aus einem TPU ELASTOLLAN® L1154D10(3), einem auf aliphatischem Polyether basierten TPU, zusammen. Die beiden äußeren Schichten (1) und (2) aus PLEXIGLAS® 6N weisen wie in Bsp. 1 je eine Dicke von 2mm auf. Die innenliegende Schicht aus TPU ELASTOLLAN® L1154D10 (3) zeigt eine Schichtdicke von 500 $\mu$m. Aus den extrudierten Platten wurden wie in Bsp. 1 Probekörper mit Kantenlängen von 90 mm mittels Laser herausgeschnitten. An den Probekörpern wurden Durchstoßversuche zur Bestimmung mechanischer Eigenschaften in Anlehnung an DIN EN ISO 6603-2 durchgeführt.

Im Vergleich zu dem in Bsp. 1 verwendeten Verbunde aus aliphatischen Polyester basierten TPU ELASTOLLAN® L785A10 in Kombination mit PLEXIGLAS® 6N zeigt der Verbund mit TPU ELASTOLLAN® L1154D10 (3) mit PLEXIGLAS® 6N , eine Durchstoßarbeit von 3500 Nmm.

Beispiel 3

Wie Beispiel 1 beschrieben, wurden auf einer Dr Collin Coextrusionsanlage Kunststoffverbundplatten bestehend aus drei Schichten hergestellt, wobei die beiden äußeren Schichten (1) und (2) aus PLEXIGLAS® 6N und die innenliegende Schicht aus einem TPU ELASTOLLAN® L1185A10(3), einem aliphatischen Polyether basierten TPU, bestehen.

An aus den Platten herausgearbeiteten Probekörpern wurden Durchstoßversuche zur Bestimmung mechanischer Eigenschaften in Anlehnung an DIN EN ISO 6603-2 durchgeführt.

Der Verbund aus TPU ELASTOLLAN® L1185A10 (3), einem aliphatischen Polyether basierten TPU in Kombination mit PLEXIGLAS® 6N zeigt eine Durchstoßarbeit von 6000 Nmm.

Beispiel 4

Auf einer Heiz-Kühlpresse wird in ein Presswerkzeug mit einer Aussparung von 193 mm x 120 mm eine extrudierte PLEXIGLAS® XT Platte mit 2mm Dicke eingelegt. Auf der Platte wird eine TPU Folie, extrudiert aus ELASTOLLAN® L785A10 mit einer Dicke von 500 $\mu$m aufgelegt und hiernach nochmals eine extrudierte PLEXIGLAS® XT Platte mit 2 mm Dicke eingelegt. Nach Schließen des Werkzeuges wird die Pressform auf 130 °C erhitzt und mit einer Kraft von 70 kN über einen Zeitraum von 40 s verpresst.

Nach Abkühlen der Pressform wird der erhaltene Kunststoff-Schichtverbund entformt und daraus Probekörper mit Kantenlängen von jeweils 90 mm herausgearbeitet. An den Probekörpern wurden Durchstoßversuche zur Bestimmung mechanischer Eigenschaften in Anlehnung an DIN EN ISO 6603-2 durchgeführt.

Die durchgeführten Durchstoßversuche ergaben für den Verbund aus aliphatischen Polyester basierten TPU ELASTOLLAN® L785A10 in Kombination mit PLEXIGLAS® XT eine Durchstoßarbeit von 11.300 Nmm.

Tabelle 1: Eigenschaften verschiedener extrudierter Kunststoffverbunde, bestehend aus PLEXIGLAS® 6N bzw. XT und verschiedenen TPU im Vergleich

|  | PMMA | TPU | TPU | Durchstoßarbeit [Nmm] |
|---|---|---|---|---|
| Versuch 1 | PLEXIGLAS 6N | ELASTOLLAN L785A10 | aliphatisch Polyester basiert | 11 500 |
| Versuch 2 | PLEXIGLAS 6N | ELASTOLLAN L1154D10 | aliphatisch Polyether basiert | 3500 |

(fortgesetzt)

| | PMMA | TPU | TPU | Durchstoßarbeit [Nmm] |
|---|---|---|---|---|
| Versuch 3 | PLEXIGLAS 6N | ELASTOLLAN L1185A10 | aliphatisch Polyether basiert | 6000 |
| Versuch 4 | PLEXIGLAS XT | ELASTOLLAN L785A10 | aliphatisch Polyester basiert | 11 400 |

**Patentansprüche**

1. Kunststoff- Schichtverbund aus mindestens zwei Poly(meth)acrylat-Schichten (1) und (2) und einer dazwischen liegenden Schicht aus einem thermoplastischen Polyurethan (3), **dadurch gekennzeichnet, dass** das thermoplastische Polyurethan zwischen 30 und 60 Gew% Hartsegmente und zwischen 40 und 70 Gew% Weichsegmente aufweist.

2. Kunststoff-Schichtverbund gemäß Anspruch 1, **dadurch gekennzeichnet, dass** das thermoplastische Polyurethan zwischen 30 und 45 Gew% Hartsegmente und zwischen 55 und 70 Gew% Weichsegmente aufweist.

3. Kunststoff-Schichtverbund gemäß Anspruch 1 oder 2, **dadurch gekennzeichnet, dass** die Weichsegmente des thermoplastischen Polyurethans aus aliphatischen Polyesterdiolen und Diisocyanaten gebildet wurden.

4. Kunststoff-Schichtverbund gemäß mindestens einem der Ansprüche 1 bis 3, **dadurch gekennzeichnet, dass** die Hartsegmente aus Diisocyanaten und Alkyldiolen, welche maximal 10 Kohlenstoffatome aufweisen, gebildet werden.

5. Kunststoff-Schichtverbund gemäß mindestens einem der Ansprüche 3 und 4, **dadurch gekennzeichnet, dass** es sich bei den Diisocyanaten gemäß Anspruch 3 und Anspruch 4 um Hexamethylendiisocyanat (HDI) oder um Dicyclohexylmethan-diisocyanat (H12MDI) handelt.

6. Kunststoff-Schichtverbund gemäß mindestens einem der Ansprüche 1 bis 5, **dadurch gekennzeichnet, dass** die Poly(meth)acrylat-Schichten (1) und (2) aus einer Monomermischung gebildet wurden, die mindestens 90 Gew% MMA enthielt.

7. Kunststoff-Schichtverbund gemäß mindestens einem der Ansprüche 1 bis 6, **dadurch gekennzeichnet, dass** eine oder beide Poly(meth)acrylat-Schichten IR-reflektierende Pigmente und/oder UV-Absorber und/oder UV-Stabilisatoren aufweist.

8. Kunststoff-Schichtverbund gemäß mindestens einem der Ansprüche 1 bis 7, **dadurch gekennzeichnet, dass** mindestens eine der beiden Poly(meth)acrylat-Schichten zusätzlich Schlagzähmodifier aufweist.

9. Verfahren zur Herstellung eines Kunststoff-Schichtverbund gemäß mindestens einem der Ansprüche 1 bis 8, **dadurch gekennzeichnet, dass** die Schichten (1), (3) und (2) aufeinandergelegt, auf eine Temperatur zwischen 80 und 140 °C erhitzt werden und mit einer Kraft zwischen 10 und 100 kN über einen Zeitraum zwischen 20 und 60 s verpresst werden.

10. Verwendung eines Kunststoff-Schichtverbund gemäß mindestens einem der Ansprüche 1 bis 8 als Verglasung in einem Automobil, Schienenfahrzeug, Luftfahrzeug, Glashaus, einer Reklametafel oder einem Gebäude.

**Claims**

1. Plastics laminate made of at least two poly (meth) acrylate layers (1) and (2) and of a layer located there between made of a thermoplastic polyurethane (3), **characterized in that** the thermoplastic polyurethane has from 30 to 60% by weight of hard segments and from 40 to 70% by weight of soft segments.

2. Plastics laminate according to Claim 1, **characterized in that** the thermoplastic polyurethane has from 30 to 45% by weight of hard segments and from 55 to 70% by weight of soft segments.

3. Plastics laminate according to Claim 1 or 2, **characterized in that** the soft segments of the thermoplastic polyurethane were formed from aliphatic polyesterdiols and diisocyanates.

4. Plastics laminate according to at least one of Claims 1 to 3, **characterized in that** the hard segments are formed from diisocyanates and alkyl diols which have at most 10 carbon atoms.

5. Plastics laminate according to at least one of Claims 3 and 4, **characterized in that** the diisocyanates according to Claim 3 and Claim 4 are hexamethylene diisocyanate (HDI) or dicyclohexylmethane diisocyanate (H12MDI).

6. Plastics laminate according to at least one of Claims 1 to 5, **characterized in that** the poly (meth) acrylate layers (1) and (2) were formed from a monomer mixture which comprised at least 90% by weight of MMA.

7. Plastics laminate according to at least one of Claims 1 to 6, **characterized in that** one or both poly(meth)acrylate layers has/have IR-reflective pigments and/or UV absorbers and/or UV stabilizers.

8. Plastics laminate according to at least one of Claims 1 to 7, **characterized in that** at least one of the two poly (meth) acrylate layers additionally has impact modifier.

9. Process for the production of a plastics laminate according to at least one of Claims 1 to 8, **characterized in that** the layers (1), (3) and (2) are mutually superposed, heated to a temperature of from 80 to 140°C and, in a press, subjected to a force of from 10 to 100 kN over a period of from 20 to 60 s.

10. Use of a plastics laminate according to at least one of Claims 1 to 8 as glazing in an automobile, in a rail vehicle, in an aircraft, in a greenhouse, in an advertising board or in a building.

## Revendications

1. Composite stratifié de matériaux synthétiques, constitué par au moins deux couches de poly(méth)acrylate (1) et (2) et par une couche située entre celles-ci, constituée par un polyuréthane thermoplastique (3), **caractérisé en ce que** le polyuréthane thermoplastique présente entre 30 et 60% en poids de segments durs et entre 40 et 70% en poids de segments souples.

2. Composite stratifié de matériaux synthétiques selon la revendication 1, **caractérisé en ce que** le polyuréthane thermoplastique présente entre 30 et 45% en poids de segments durs et entre 55 et 70% en poids de segments souples.

3. Composite stratifié de matériaux synthétiques selon la revendication 1 ou 2, **caractérisé en ce que** les segments souples du polyuréthane thermoplastique sont formés par des polyesterdiols aliphatiques et des diisocyanates.

4. Composite stratifié de matériaux synthétiques selon au moins l'une quelconque des revendications 1 à 3, **caractérisé en ce que** les segments durs sont formés par des diisocyanates et des alkyldiols qui présentent au maximum 10 atomes de carbone.

5. Composite stratifié de matériaux synthétiques selon au moins l'une quelconque des revendications 3 et 4, **caractérisé en ce qu'**il s'agit, pour les diisocyanates selon la revendication 3 et la revendication 4, de diisocyanate d'hexaméthylène (HDI) ou de diisocyanate de dicyclohexylméthane (H12MDI).

6. Composite stratifié de matériaux synthétiques selon au moins l'une quelconque des revendications 1 à 5, **caractérisé en ce que** les couches de poly(méth)acrylate (1) et (2) ont été formées à partir d'un mélange de monomères qui contient au moins 90% en poids de MMA.

7. Composite stratifié de matériaux synthétiques selon au moins l'une quelconque des revendications 1 à 6, **caractérisé en ce qu'**une ou les deux couches de poly(méth)acrylate présente(nt) des pigments réfléchissant les IR et/ou des absorbants des UV et/ou des stabilisateurs aux UV.

8. Composite stratifié de matériaux synthétiques selon au moins l'une quelconque des revendications 1 à 7, **caractérisé en ce qu'**au moins une des deux couches de poly(méth)acrylate présente en outre un agent de modification de la résilience.

9. Procédé pour la fabrication d'un composite stratifié de matériaux synthétiques selon au moins l'une quelconque des revendications 1 à 8, **caractérisé en ce que** les couches (1), (3) et (2) sont superposées, chauffées à une température entre 80 et 140°C et pressées à une force entre 10 et 100 kN sur une durée entre 20 et 60 s.

10. Utilisation d'un composite stratifié de matériaux synthétiques selon au moins l'une quelconque des revendications 1 à 8 comme vitrage dans une voiture, dans un véhicule ferroviaire, dans un aéronef, dans une serre, dans un panneau publicitaire ou dans un bâtiment.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1577084 A
- WO 0247908 A
- WO 9613137 A
- DE 102006029613
- EP 1817375 A
- EP 1963415 A

**In der Beschreibung aufgeführte Nicht-Patentliteratur**

- **GÜNTER OERTEL.** Polyurethane Handbook. Hanser Publisher, 1993, 98-119